## Europäisches Patentamt

## European Patent Office

## Office européen des brevets

(19)

(11) **EP 1 059 177 A1**

(12) **EUROPÄISCHE PATENTANMELDUNG**

(43) Veröffentlichungstag:
**13.12.2000 Patentblatt 2000/50**

(51) Int. Cl.[7]: **B60C 23/04**

(21) Anmeldenummer: **00111634.2**

(22) Anmeldetag: **31.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **11.06.1999 DE 19926616**

(71) Anmelder:
**Continental Aktiengesellschaft
30165 Hannover (DE)**

(72) Erfinder:
• **Behrends, Holger
30559 Hannover (DE)**
• **Gerhard, Ernst, Dr.
30629 Hannover (DE)**

(54) **Verfahren zur Durchführung der Zuordnung von Reifendruckkontrollvorrichtungen eines Reifendruckkontrollsystems zu den Radpositionen eines Kraftfahrzeuges**

(57)    Die Erfindung betrifft ein Verfahren zur Durchführung der Zuordnung von Reifendruckkontrollvorrichtungen eines Reifendruckkontrollsystems zu den Radpositionen eines Kraftfahrzeuges und ein Reifendruckkontrollsystem zur Durchführung des Verfahrens. Das Reifendruckkontrollsystem enthält ein Antennensystem 2 aus zwei Antennen 4 und 6, die über einen Phasenschieber 8 miteinander gekoppelt sind, wobei je nach Phasenwinkel des Phasenschiebers 8 ein Empfangsmaximum des Antennensystems 2 in eine andere Richtung weist. Der Phasenwinkel des Phasenschiebers 8 ist durch die Zentraleinheit 26 steuerbar, so daß das Empfangsmaximum gezielt in Richtung einer Reifendruckkontrollvorrichtung 32a bis 32d ausgerichtet werden kann. Anhand des eingestellten Phasenwinkels φ stellt die Zentraleinheit 26 diese Richtung fest und ordnet die entsprechende Reifendruckkontrollvorrichtung 32a bis 32d derjenigen Radposition zu, die in der zuvor festgestellten Richtung liegt. Die übrigen Reifendruckkontrollvorrichtungen 32a bis 32d werden ihren Radpositionen entsprechend zugeordnet.

FIG. 3

EP 1 059 177 A1

**Beschreibung**

Die Erfindung betrifft ein Verfahren zur Durchführung der Zuordnung von Reifendruckkontrollvorrichtungen eines Reifendruckkontrollsystems zu den Radpositionen eines Kraftfahrzeuges gemäß dem Oberbegriff des Anspruchs 1. Die Erfindung betrifft ferner ein Reifendruckkontrollsystem gemäß dem Oberbegriff des Anspruchs 3.

Aus sicherheitstechnischen Gründen muß der Reifendruck von Kraftfahrzeugreifen regelmäßig überprüft werden, was von dem Kraftfahrzeugfahrer aus unterschiedlichen Gründen häufig versäumt wird. Deshalb sind bereits Reifendruckkontrollsysteme entwickelt worden, die jedem Reifen zugeordnet eine Reifendruckkontrollvorrichtung enthalten, die den Reifendruck der Kraftfahrzeugreifen automatisch messen und zumindest eine kritische Abweichung von einem Soll-Reifendruck dem Kraftfahrzeugfahrer melden. Die Reifendruckkontrollvorrichtungen können z. B. in den Reifen einvulkanisiert oder eingeklebt sein oder auch am oder im Ventil bzw. an oder in der Felge befestigt sein. Entsprechende Ausbildungen sind bekannt.

Aus der DE 42 05 911 A1 ist ein Reifendruckkontrollsystem bekannt, bei dem jedem Reifen des Kraftfahrzeuges jeweils eine Reifendruckkontrollvorrichtung zugeordnet ist. Jede Reifendruckkontrollvorrichtung übermittelt in regelmäßigen Abständen ein gemessenes Drucksignal zusammen mit einer individuellen Kennung an eine Zentraleinheit. Durch die Übermittlung einer individuellen Kennung wird vermieden, daß die an die Zentraleinheit übermittelten Daten beispielsweise mit Daten verwechselt werden, die von einem anderen Fahrzeug ausgesendet werden. In der Zentraleinheit sind Wertepaare der Form (Kennung der Reifendruckkontrollvorrichtung/Radposition) für jedes Rad des Kraftfahrzeuges gespeichert, so daß durch entsprechenden Vergleich in der Zentraleinheit darauf geschlossen werden kann, welche Kennung mit dem dazugehörigen Drucksignal von welcher Radposition des Kraftfahrzeuges gesendet wird. Eine Abweichung des übermittelten Drucksignals von einem vorgegebenen Wert an einer Radposition wird dem Kraftfahrzeugfahrer von der Zentraleinheit angezeigt, so daß dieser geeignete Maßnahmen einleiten kann.

Die Ausführungen zeigen, daß das aus der DE 42 05 911 A1 bekannte Reifendruckkontrollsystem nur dann einwandfrei funktionieren kann, wenn in der Zentraleinheit die Zuordnungen (Kennung der Reifendruckkontrollvorrichtungen/Radposition) richtig gespeichert sind. Dementsprechend muß zumindest nach jedem Reifenwechsel am Kraftfahrzeug eine neue Zuordnung vorgenommen werden, was in einem Zuordnungsmodus des Reifendruckkontrollsystems geschieht. Bei dem aus der DE 42 05 911 A1 bekannten Reifendruckkontrollsystem wird eine neue Zuordnung durchgeführt, indem die Intensität der von den einzelnen Reifendruckkontrollvorrichtungen gesendeten Signale von Empfängern, von denen jeweils einer einer Radposition fest zugeordnet ist, gemessen wird und jedes von einer Reifendruckkontrollvorrichtung ausgesendete Signal der Radposition des Kraftfahrzeuges zugeordnet wird, an welcher es die höchste Signalintensität erzeugt (beispielsweise wird die Signalintensität der Reifendruckkontrollvorrichtung, die sich in dem Reifen vorne links befindet, an dem Empfänger am größten sein, der der Radposition vorne links zugeordnet ist, so daß eine entsprechende Zuordnung festgestellt werden kann). Die entsprechenden Zuordnungen werden in der Zentraleinheit gespeichert.

Das erläuterte Zuordnungsverfahren benötigt in jedem Radkasten des Kraftfahrzeuges einen Empfänger, der mit der Zentraleinheit verkabelt werden muß, wodurch die Kosten des aus der DE 42 05 911 A1 bekannten Reifendruckkontrollsystems in die Höhe getrieben werden. Aus der DE 196 18 658 A1 ist ein Reifendruckkontrollsystem bekannt, bei dem eine neue Zuordnung der Reifendruckkontrollvorrichtungen zu den Radpositionen mit Hilfe lediglich eines Empfängers im Kraftfahrzeug durchgeführt werden kann, so daß sich gegenüber dem aus der DE 42 05 911 A1 bekannten Reifendruckkontrollsystem ein Vorteil ergibt. Der Grundgedanke des aus der DE 196 18 658 A1 bekannten Zuordnungsverfahrens ist darin zu sehen, daß eine Meßgröße an jeder Radposition des Kraftfahrzeuges durch zwei unabhängige Meßvorrichtungen gemessen wird, wobei von der einen Meßvorrichtung die Radposition bekannt ist und die andere Meßvorrichtung Bestandteil der Reifendruckkontrollvorrichtung ist, die sich im Reifen des Kraftfahrzeuges befindet. Bei der ersten Meßvorrichtung kann es sich beispielsweise um einen ABS-Sensor und bei der zweiten Meßvorrichtung um einen Umdrehungssensor handeln, der der jeweiligen Reifendruckkontrollvorrichtung zugeordnet ist. Mit den Sensoren werden im Zuordnungsmodus unabhängig voneinander die Drehzahlen der Kraftfahrzeugräder gemessen und die Kennung einer Reifendruckkontrollvorrichtung wird derjenigen Radposition zugeordnet, an der von dem ABS-Sensor und einem Umdrehungssensor die gleiche Drehzahl gemessen wurde.

Das im Zusammenhang mit der DE 196 18 658 A1 erläuterte Zuordnungsverfahren erfordert an jeder Reifendruckkontrollvorrichtung einen Umdrehungssensor, wodurch die Kosten des Reifendruckkontrollsystems ebenfalls in die Höhe getrieben werden, auch wenn die Gesamtkosten niedriger sind als bei dem aus der DE 42 05 911 A1 bekannten Reifendruckkontrollsystem. Darüber hinaus ist festzustellen, daß die Umdrehungssensoren den Stromverbrauch der Reifendruckkontrollvorrichtungen in die Höhe treiben und somit die Lebensdauer derer Batterien verkürzen.

Der Erfindung liegt die Aufgabe zugrunde, ein Verfahren zur Durchführung der Zuordnung von Reifendruckkontrollvorrichtungen eines Reifendruckkontrollsystems zu den Radpositionen eines Kraftfahrzeuges zu schaffen, das sich mit Hilfe eines preiswerten Reifendruckkontrollsystems automatisch durchführen läßt. Der Erfindung liegt ferner die Aufgabe zugrunde, ein Reifendruckkontrollsystem zu schaffen, mit der das Verfahren durchführbar ist.

Gemäß den kennzeichnenden Merkmalen des Anspruchs 1 wird die Aufgabe dadurch gelöst, daß

- das Antennensystem derart ausgebildet ist, daß die Richtung eines Empfangsmaximums des Antennensystems mittels einer variablen Steuergröße ausrichtbar ist und daß
- die Steuergröße durch die Zentraleinheit steuerbar ist, wobei der Zusammenhang zwischen dem Wert der Steuergröße und der Richtung, in die das Empfangsmaximum bei einer bestimmten Steuergröße weist, der Zentraleinheit bekannt ist, und daß die Zuordnung einer Reifendruckkontrollvorrichtung zu einer Radposition in folgenden Verfahrensschritten durchgeführt wird:
- die Reifendruckkontrollvorrichtung sendet eine Datensendung an die Zentraleinheit
- die Datensendung wird von der Zentraleinheit über das Antennensystem empfangen
- die Zentraleinheit steuert die Steuergröße derart, daß sie die Datensendung mit maximalem Empfangspegel empfängt
- die Zentraleinheit folgert, daß bei Empfang des maximalen Empfangspegels ein Empfangsmaximum in Richtung der Reifendruckkontrollvorrichtung ausgerichtet ist und stellt anhand der Steuergröße diese Richtung fest
- die Zentraleinheit ordnet die in der Datensendung enthaltene individuelle Kennung derjenigen Radposition zu, die in der zuvor festgestellten Richtung liegt.

Die Aufgabe wird ferner durch die kennzeichnenden Merkmale des nebengeordneten Anspruchs 4 gelöst.

Die mit der Erfindung erzielten Vorteile sind insbesondere darin zu sehen, daß sich das erfindungsgemäße Verfahren mit Hilfe eines preiswerten Reifendruckkontrollsystems durchführen läßt, da weder eine aufwendige Verkabelung der Radhäuser des Kraftfahrzeuges noch die Anordnung von Umdrehungssensoren auf den Reifendruckkontrollvorrichtungen (wie beim eingangs erläuterten Stand der Technik) notwendig ist. Dennoch ist das Zuordnungsverfahren mit Hilfe des erfindungsgemäßen Reifendruckkontrollsystems zuverlässig und automatisch durchführbar. Gemäß einem Ausführungsbeispiel der Erfindung nach Anspruch 2 bzw. 5 besteht das Antennensystem aus zwei Antennen, die über einen Phasenschieber miteinander gekoppelt sind, wobei je nach Phasenwinkel des Phasenschiebers ein Empfangsmaximum des Antennensystems in eine andere Richtung weist, wobei der Phasenwinkel des Phasenschiebers durch die Zentraleinheit steuerbar ist, wobei der Zusammenhang zwischen dem Phasenwinkel und der Richtung, in die das Empfangsmaximum weist, der Zentraleinheit bekannt ist. Der Vorteil dieses Ausführungsbeispiels ist darin zu sehen, daß von der Zentraleinheit zur Ausrichtung des Empfangsmaximums des Antennensystems lediglich der Phasenschieber elektronisch gesteuert zu werden braucht, so daß das Antennensystem (inklusive seiner Verbindung zur Zentraleinheit) nicht über mechanisch bewegliche (und damit anfällige) Teile zu verfügen braucht.

Gemäß einer Weiterbildung der Erfindung nach Anspruch 3 bildet die Zentraleinheit aus mehreren Steuergrößen bzw. Phasenwinkeln, bei denen sie eine bestimmte individuelle Kennung mit in etwa gleich hohem Empfangspegel empfängt, einen Mittelwert und stellt anhand dieses Mittelwertes die Richtung fest, in der die Reifendruckkontrollvorrichtung liegt. Der Vorteil dieser Weiterbildung ist darin zu sehen, daß die Zuordnung einer Reifendruckkontrollvorrichtung zu einer Radposition auch dann noch möglich ist, wenn die Zentraleinheit bei der Durchführung des Verfahrens nach Anspruch 1 für mehrere Richtungen, die um eine „Hauptrichtung", in der sich eine Reifendruckkontrollvorrichtung befindet, schwanken, in etwa gleich hohe Empfangspegel ermittelt hat.

Gemäß einer Weiterbildung des Reifendruckkontrollsystems nach Anspruch 6 ist das Antennensystem derartig im Kraftfahrzeug angeordnet, daß, wenn auf eine Reifendruckkontrollvorrichtung ein Empfangsmaximum des Antennensystems ausgerichtet ist, auf eine andere Reifendruckkontrollvorrichtung des Reifendruckkontrollsystems kein Empfangsmaximum ausgerichtet ist. Der Vorteil dieser Weiterbildung wird verständlich, wenn man sich folgendes Problem verdeutlicht: Es gibt Antennensysteme, die zwei in unterschiedliche Richtungen weisende Empfangsmaxima aufweisen. Ein solches Antennensystem ließe sich im Kraftfahrzeug theoretisch derartig anordnen, daß sich die beiden Empfangsmaxima auf zwei Räder des Kraftfahrzeuges gleichzeitig ausrichten lassen. Sendet die Reifendruckkontrollvorrichtung eines dieser Räder eine Datensendung mit seiner individuellen Kennung dann an die Zentraleinheit, so kann diese nicht entscheiden, von welchem der beiden Räder des Kraftfahrzeuges sie diese empfängt. Eine eindeutige Zuordnung der Reifendruckkontrollvorrichtung zur Radposition des Kraftfahrzeuges ist dann nicht möglich. Dieses Problem wird durch die Weiterbildung des Reifendruckkontrollsystems gemäß Anspruch 6 gelöst.

Gemäß einer Weiterbildung des Reifendruckkontrollsystems nach Anspruch 7 enthält das Antennensystem neben den beiden Antennen, die über den Phasenschieber miteinander gekoppelt sind, mindestens eine weitere Antenne, die die Richtcharakteristik des Antennensystems derartig beeinflußt, daß das Antennensystem genau ein ausgeprägtes Empfangsmaximum hat, das je nach Phasenwinkel des Phasenschiebers in eine andere Richtung weist. Der Vorteil dieser Weiterbildung ist darin zu sehen, daß ein derartiges Antennensystem an einem beliebigen Ort des Kraftfahrzeuges angeordnet werden kann, da es nur ein ausgeprägtes Empfangsmaximum aufweist und die im letzten Absatz erläuterten Probleme somit nicht auftreten können.

Gemäß einem Ausführungsbeispiel des Reifendruckkontrollsystems nach Anspruch 8 weist jede der zwei Antennen des Antennensystems einen Fußpunkt auf, wobei beide Fußpunkte auf einer Verbindungslinie liegen, die zwei gegenüberliegende Räder des Kraftfahrzeuges miteinander verbindet. Hierbei liegen die beiden Räder des Kraftfahrzeuges vorzugsweise an einer Achse bzw. an einer Längsseite des Kraftfahrzeuges einander gegenüber. Darüber hinaus haben die beiden Fußpunkte der zwei Antennen des Antennensystems in diesem Fall bevorzugt einen Abstand zueinander, der einem Viertel des ungeradzahligen Vielfachen der Wellenlänge entspricht, mit der die Reifendruckkontrollvorrichtungen ihre individuellen Kennungen an die Zentraleinheit übermitteln, so wie es auch in Anspruch 9 beansprucht ist.

Gemäß einer Weiterbildung des Reifendruckkontrollsystems nach Anspruch 10 enthält die Zentraleinheit eine Leiterplatte, auf der die zwei Antennen und der Phasenschieber des Antennensystems integriert sind. Der Vorteil dieser Weiterbildung ist darin zu sehen, daß die Integration der Antennen und des Phasenschiebers des Antennensystems auf der ohnehin in der Zentraleinheit vorhandenen Leiterplatte die Kosten des Reifendruckkontrollsystems nochmals senkt.

Ein Ausführungsbeispiel und weitere Vorteile der Erfindung werden im Zusammenhang mit den nachstehenden Figuren erläutert, darin zeigt:

Fig. 1          ein Antennensystem
Fig. 2a         ein Kraftfahrzeug mit einem Reifendruckkontrollsystem in schematischer Darstellung,
Fig. 2b, 2c     ein Kraftfahrzeug mit einem Reifendruckkontrollsystem in schematischer Darstellung,
Fig. 3          ein Kraftfahrzeug mit einem Reifendruckkontrollsystem in schematischer Darstellung.

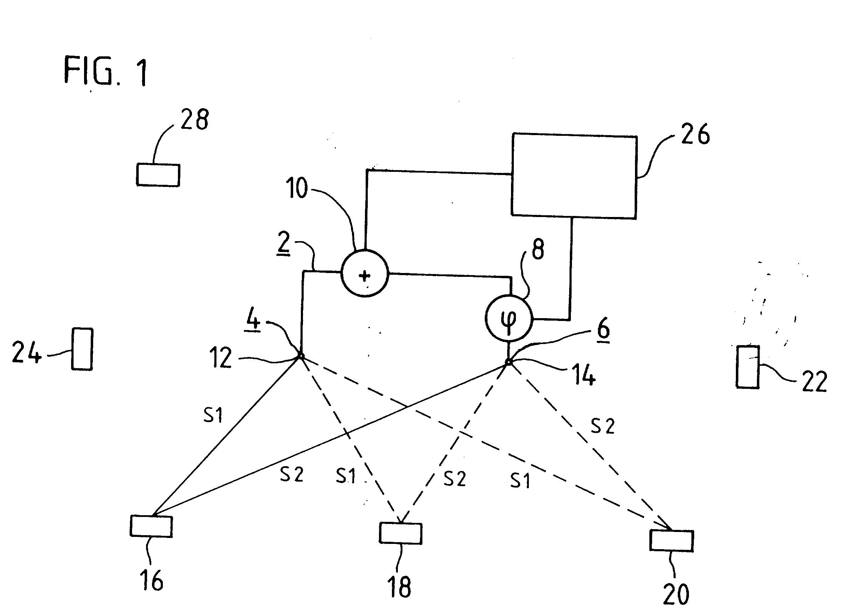

Figur 1 zeigt in schematischer Darstellung ein Antennensystem 2 in Draufsicht, daß aus zwei Antennen 4 und 6 besteht, die über einen Phasenschieber 8 miteinander gekoppelt sind. Die Antenne 4 wird direkt und die Antenne 6 wird über den Phasenschieber 8 auf einen Addierer 10 geführt. Die Antennen 4 und 6 ragen aus dem Fahrzeugboden heraus und enden in (in der Papierebene liegenden) Fußpunkten 12 und 14, von denen ausgehend Hochfrequenzsignale über Anschlußleitungen der Antennen 4 und 6 auf den Addierer 10 geführt werden, in dem die Hochfrequenzsignale — wie später genauer erläutert — miteinander addiert werden. Bei den Antennen 4 und 6 kann es sich z. B. um $\lambda/4$-Antennen (also um Antennen, deren Länge ¼ der Wellenlänge entspricht, mit der die Hochfrequenzsignale an das Antennensystem übermittelt werden) handeln, die besonders preiswert herstellbar sind.

Die Richtung, in die ein Empfangsmaximum des Antennensystems 2 weist, ist abhängig von dem Phasenwinkel, der in dem Phasenschieber 8 eingestellt ist. Der Phasenwinkel des Phasenschiebers 8 ist durch die Zentraleinheit 26 veränderbar, so daß ein Empfangsmaximum des Antennensystems 2 in jede Richtung der Papierebene ausgerichtet werden kann.

Im folgenden wird erläutert, wie die Richtung des Empfangsmaximums des Antennensystems 2 von dem Phasenwinkel des Phasenschiebers 8 abhängt: Dazu wird zunächst davon ausgegangen, daß der Hochfrequenzsender 16 ein Hochfrequenzsignal aussendet. Eine Wellenfront des Hochfrequenzsignals legt bis zu dem Fußpunkt 12 der Antenne 4 einen Weg $s_1$ und bis zum Fußpunkt 14 der Antenne 6 einen Weg $s_2$ zurück. Im Fußpunkt 12 liegt das in die Antenne 4 eingekoppelte Hochfrequenzsignal mit einer bestimmten Phasenlage $\varphi_1$ vor. Im Fußpunkt 14 liegt das in die Antenne 6 eingekoppelte Hochfrequenzsignal mit einer bestimmten Phasenlage $\varphi_2$ vor. Wegen des Wegunterschiedes $ds = s_2 - s_1$ wird die Phasenlage $\varphi_2$ im allgemeinen ungleich der Phasenlage $\varphi_1$ sein ($\varphi_2 = \varphi_1$ gilt nur dann, wenn $ds = 0$ ist bzw. einem ganzzahligen Vielfachen der Wellenlänge entspricht, mit der das Hochfrequenzsignal ausgesendet wird).

Das in die Antenne 4 eingekoppelte Hochfrequenzsignal wird über den Fußpunkt 12 direkt auf den Addierer 10 geführt, wohingegen das in die Antenne 6 eingekoppelte Hochfrequenzsignal über den Fußpunkt 14 und den Phasenschieber 8 zu dem Addierer 10 geführt wird. In dem Addierer 10 werden die beiden Hochfrequenzsignale, die über die Antennen 4 und 6 zugeführt werden, addiert. Dementsprechend liegt im Addierer 10 dann ein Empfangsmaximum vor, wenn die beiden ihm zugeführten Hochfrequenzsignale keinen Phasenversatz bzw. einen Phasenversatz von 360° oder Vielfachen hiervon aufweisen. Um das Empfangsmaximum des Antennensystems auf den Hochfrequenzsender 16 auszurichten, wird der Phasenwinkel $\varphi$ des Phasenschiebers 8, mit dessen Hilfe die Phasenlage $\varphi_2$ des Hochfrequenzsignals, das in dem Fußpunkt 14 der Antenne 6 vorliegt, verschoben werden kann, nun gerade so eingestellt, daß diese Bedingung erfüllt ist.

Beträgt $ds$ z. B. $\lambda/4$, so ist das Hochfrequenzsignal, das im Fußpunkt 14 vorliegt, gegenüber dem Hochfrequenzsignal, das im Fußpunkt 12 vorliegt, um 90° phasenverschoben. Der Phasenschieber 8 muß den Phasenwinkel $\varphi$ des Hochfrequenzsignals, das am Fußpunkt 14 vorliegt, dementsprechend um weitere 270° phasenverschieben, damit sich die beiden Hochfrequenzsignale im Addierer 10 optimal konstruktiv überlagern und dort ein Empfangsmaximum festgestellt wird. Dementsprechend weist ein Empfangsmaximum des Antennensystems 2 bei einem Phasenwinkel φ = 270° des Phasenschiebers 8 in Richtung des Hochfrequenzsenders 16.

Im folgenden wird davon ausgegangen, daß der Hochfrequenzsender 18 ein Hochfrequenzsignal an das Antennensystem 2 aussendet. Da der Weg des Hochfrequenzsignals $S_1$ zu dem Fußpunkt 12 genauso lang ist wie der Weg $S_2$ des Hochfrequenzsignals zu dem Fußpunkt 14, wird ds = 0. An dem Phasenschieber 8 ist somit der Phasenwinkel φ = 0° einzustellen, damit sich die beiden Hochfrequenzsignale, die über die Antennen 4 bzw. 6 auf den Addierer 10 geführt werden, in diesem optimal addieren. Bei einem Phasenwinkel φ = 0° weist ein Empfangsmaximum des Antennensystems 2 also in die Richtung des Hochfrequenzsenders 18.

Entsprechende Überlegungen lassen sich für alle anderen Phasenwinkel φ des Phasenschiebers 8 und für Hochfrequenzsender 20, 22 und 24 in den unterschiedlichsten Positionen machen. Mit Hilfe des Phasenschiebers 8 läßt sich also ein Empfangsmaximum des Antennensystems 2 durch die Zentraleinheit 26 in jede Richtung der Papierebene ausrichten. Mit anderen Worten formuliert: Auf jeden Hochfrequenzsender, der ein Hochfrequenzsignal an das Antennensystem 2 übermittelt, läßt sich ein Empfangsmaximum 2 des Antennensystems durch entsprechende Einstellung des Phasenwinkels φ über den Phasenschieber 8 ausrichten.

Im Zusammenhang mit dem in der Figur 1 gezeigten Antennensystem 2 ist festzustellen, daß zu einem bestimmten Phasenwinkel φ des Phasenschiebers 8 zum Teil zwei oder mehr Empfangsmaxima gehören, die in unterschiedliche Richtungen weisen. So nimmt beispielsweise der Hochfrequenzsender 28 zu den Fußpunkten 12 und 14 der Antennen 4 und 6 des Antennensystems 2 die gleiche relative Position ein wie der Hochfrequenzsender 16, so daß ds = $s_2 - s_1$ für die Hochfrequenzsender übereinstimmt. Entsprechend den obigen Ausführungen wird ein von dem Hochfrequenzsender 28 ausgesendetes Hochfrequenzsignal durch das Antennensystem 2 dann mit maximalem Empfangspegel empfangen, wenn der Phasenwinkel φ des Phasenschiebers 8 auf 270° steht. Bei einem Phasenwinkel φ von 270° weist also ein Empfangsmaximum auf den Hochfrequenzsender 16 und ein weiteres auf den Hochfrequenzsender 28. Liegt bei einem Phasenwinkel φ von 270° in dem Addierer 10 also ein maximaler Empfangspegel vor, so kann die Zentraleinheit 26 nicht unterscheiden, ob das Hochfrequenzsignal von dem Hochfrequenzsender 16 oder von dem Hochfrequenzsender 28 ausgesendet wurde.

Die Tatsache, daß einem Phasenwinkel φ des Phasenschiebers 8 zwei oder mehr Empfangsmaxima zugeordnet sind, muß berücksichtigt werden, wenn ein in der Figur 1 gezeigtes Antennensystem 2 in ein Kraftfahrzeug eingebaut wird, um Reifendruckkontrollvorrichtungen eines Reifendruckkontrollsystems ihren Radpositionen zuzuordnen. Dies kann beispielsweise derart geschehen, daß, wenn auf eine Reifendruckkontrollvorrichtung des Kraftfahrzeuges ein Empfangsmaximum des Antennensystems ausgerichtet ist, auf eine andere Reifendruckkontrollvorrichtung kein Empfangsmaximum des Antennensystems ausgerichtet ist. In diesem Fall ist eine eindeutige Zuordnung des Phasenwinkels des Phasenschiebers 8 zu der Reifendruckkontrollvorrichtung möglich (Genaueres s. unten).

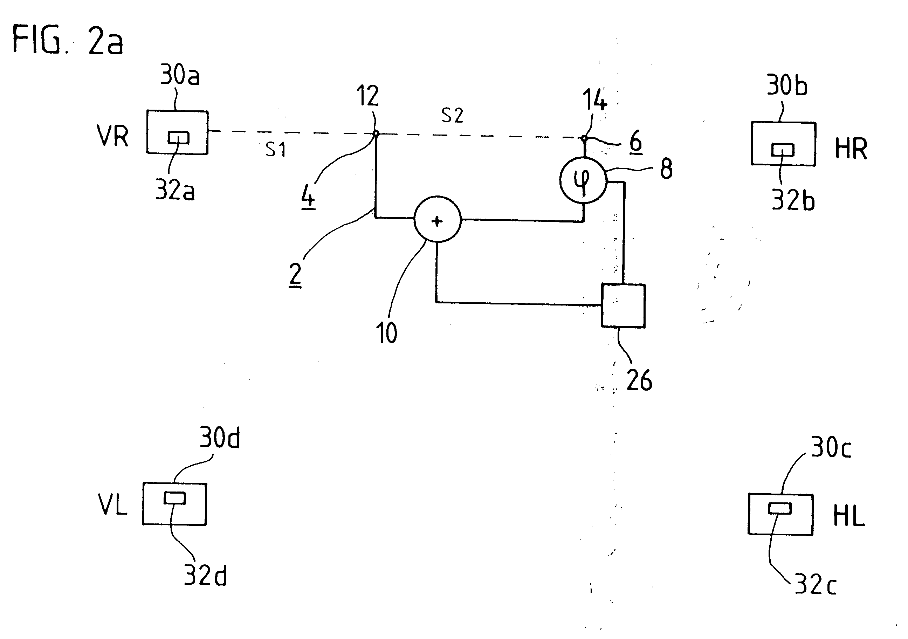

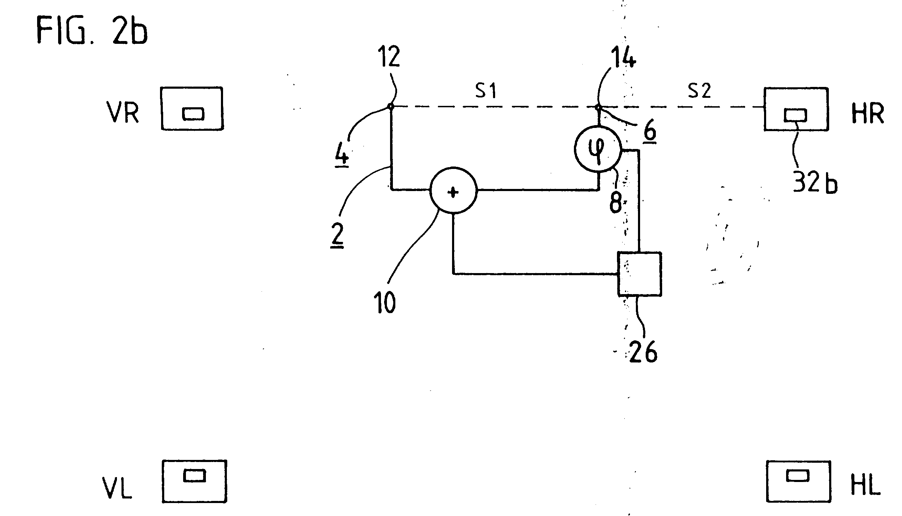

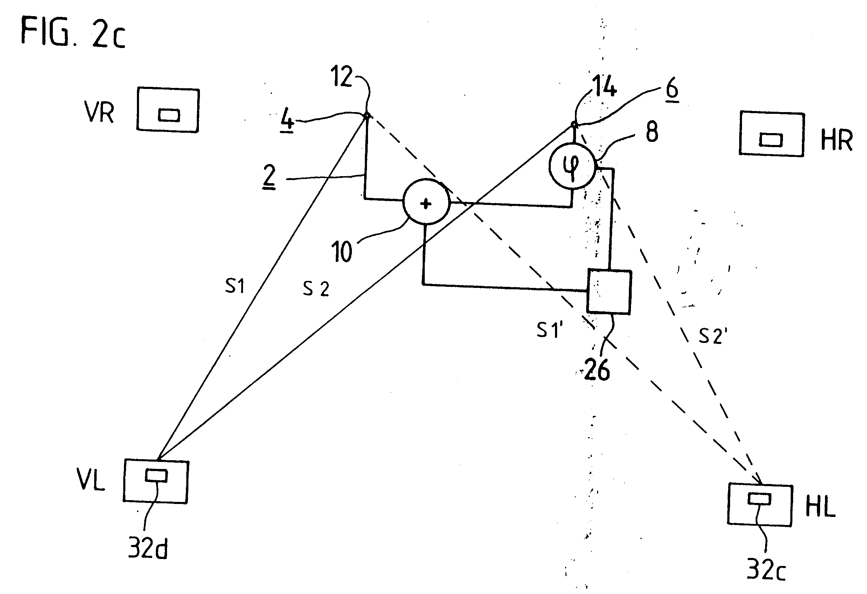

Figur 2 zeigt in stark schematisierter Darstellung ein Kraftfahrzeug mit einem Reifendruckkontrollsystem in Draufsicht, wobei nur die für die nachfolgenden Erläuterungen notwendigen Bestandteile gezeigt sind. Das Kraftfahrzeug verfügt über Räder 30a bis 30d, die jeweils eine Reifendruckkontrollvorrichtung 32a bis 32d enthalten. Hierbei befindet sich das Rad 30a in der Position „vorne rechts", das Rad 30b in der Position „hinten rechts", das Rad 30c in der Position „hinten links", das Rad 30d in der Position „vorne links" des Kraftfahrzeuges.

Im Folgenden wird kurz erläutert, wie mit Hilfe der Reifendruckkontrollvorrichtungen 30a bis 30d der Reifendruck der Räder 32a bis 32d des Kraftfahrzeuges überwacht werden kann, und zwar am Beispiel der Reifendruckkontrollvorrichtung 32a, die dem Rad 30a in der Radposition „vorne rechts" zugeordnet ist. Die Reifendruckkontrollvorrichtung 32a übermittelt in zeitlichen Abständen eine Datensendung in Form eines Hochfrequenzsignals an die Zentraleinheit 26 des Reifendruckkontrollsystems, das eine individuelle Kennung und eine Information über den Luftdruck des Rades 30a enthält. In der Zentraleinheit 26 sind die individuellen Kennungen der Reifendruckkontrollvorrichtungen 32a bis 32d zusammen mit der Radposition gespeichert, in denen sich die entsprechenden Reifendruckkontrollvorrichtungen befinden. Die individuelle Kennung der Reifendruckkontrollvorrichtung 32a ist in der Zentraleinheit 26 also der Radposition „vorne rechts" zugeordnet. Durch Vergleich der von der Reifendruckkontrollvorrichtung 32a übermittelten individuellen Kennung mit den in der Zentraleinheit 26 gespeicherten individuellen Kennungen folgert die Zentraleinheit 26, daß das Hochfrequenzsignal aus der Radposition „vorne rechts" übermittelt wird. Nachdem die Zentraleinheit 26 dies festgestellt hat, vergleicht sie den in dem Hochfrequenzsignal enthaltenen Luftdruck mit einem für die Radposition „vorne rechts" vorgegebenen Luftdruck. Weicht der übermittelte Luftdruck über ein vorgegebenes Maß hinaus von dem vorgegebenen Luftdruck ab, so erzeugt die Zentraleinheit 26 eine Warnung für den Kraftfahrzeugfahrer. Dieser kann dann entsprechende Maßnahmen einleiten. Der Luftdruck der Räder 30b bis 30d wird mit Hilfe der Reifendruckkontrollvorrichtungen 32b bis 32d entsprechend überwacht.

Die obigen Ausführungen zeigen, daß das erläuterte Verfahren nur dann fehlerfrei funktionieren kann, wenn in der Zentraleinheit 26 die Reifendruckkontrollvorrichtungen 32a bis 32d den Radpositionen richtig zugeordnet sind. Findet an dem Kraftfahrzeug also ein Radwechsel bzw. ein Reifenwechsel und damit ein Wechsel der Reifendruckkontrollvorrichtungen statt, so müssen diese in der Zentraleinheit 26 den Radpositionen neu zugeordnet werden.

Das Reifendruckkontrollsystem enthält ein Antennensystem 2, mit dessen Hilfe das Zuordnungsverfahren durchgeführt wird. Dieses verfügt über Antennen 4 und 6, die über einen Phasenschieber 8 miteinander gekoppelt sind. Ein derartiges Antennensystem 2 ist bereits im Zusammenhang mit der Figur 1 erläutert worden. Abhängig von dem Phasenwinkel φ des Phasenschiebers 8 weist ein Empfangsmaximum des Antennensystems 2 in eine andere Richtung. Das Antennensystem ist derartig in dem Kraftfahrzeug anzuordnen, daß, wenn auf eine Reifendruckkontrollvorrichtung 32a bis 32d ein Empfangsmaximum des Antennensystems 2 ausgerichtet ist, auf eine andere Reifendruckkontrollvorrichtung 32a bis 32d kein Empfangsmaximum ausgerichtet ist, um eine eindeutige Zuordnung der Reifendruckkontrollvorrichtungen 32a bis 32d zu den Radpositionen zu ermöglichen. Dies ist beispielsweise gewährleistet, wenn der Fußpunkt 12 der Antenne 4 und der Fußpunkt 14 der Antenne 6 auf einer Verbindungslinie zwischen zwei an einer Achse oder an einer Längsseite des Kraftfahrzeuges gegenüberliegenden Rädern 30a und 30b des Kraftfahrzeuges liegen und der Abstand der beiden Fußpunkte 12 und 14 einem Viertel des ungeradzahligen Vielfachen der Wellenlänge entspricht, mit der die Reifendruckkontrollvorrichtungen 32a bis 32d ihre individuellen Kennungen an die Zentraleinheit 26 übermitteln (sämtliche Reifendruckkontrollvorrichtungen 32a bis 32d des Reifendruckkontrollsystems übermitteln die Hochfrequenzsignale mit der gleichen Wellenlänge). Der Phasenwinkel des Phasenschiebers 8 ist durch die Zentraleinheit 26 steuerbar. Darüber hinaus ist in der Zentraleinheit 26 für jede Radposition eine Information darüber gespeichert, bei welchem Phasenwinkel φ des Phasenschiebers 8 das Empfangsmaximum des Antennensystems 2 auf die Radposition weist. Beim Einbau des Antennensystems 2 ist darauf zu achten, daß die in der Zentraleinheit gespeicherten Phasenwinkel mit den tatsächlichen Phasenwinkeln übereinstimmen, um eine eindeutige Zuordnung zu ermöglichen.

Im Folgenden wird erläutert, wie mit Hilfe des Antennensystems 2 die Reifendruckkontrollvorrichtungen 32a bis 32d den Radpositionen zugeordnet werden, wobei mit der Reifendruckkontrollvorrichtung 32a begonnen wird. Die Reifendruckkontrollvorrichtung sendet zu einem beliebigen Zeitpunkt ein Hochfrequenzsignal mit ihrer individuellen Kennung aus. Dies wird abhängig von dem Phasenwinkel φ des Phasenschiebers 8 mehr oder minder stark von dem Antennensystem 2 empfangen und von dort an die Zentraleinheit 26 weitergeleitet. Die Zentraleinheit 26 steuert den Phasenwinkel φ des Phasenschiebers 8 nun derart, daß sich in dem Addierer 10 des Antennensystems 2 ein maximaler Empfangspegel ergibt. Da der Wegunterschied ds = $s_2$ — $s_1$ des Hochfrequenzsignals λ/4 beträgt (weil der Wegunterschied dem Abstand λ/4 der Fußpunkte 12 und 14 entspricht), wird der Empfangspegel des Hochfrequenzsignals bei einem Phasenwinkel φ von 270° maximal sein. In der Zentraleinheit 26 ist die Information gespeichert, daß bei einem Phasenwinkel φ von 270° das Empfangsmaximum des Antennensystems 2 auf die Radposition „vorne rechts" des Kraftfahrzeuges gerichtet ist. Somit kann die Zentaleinheit 26 die von der Reifendruckkontrollvorrichtung 32a ausgesendete individuelle Kennung der Radposition „vorne rechts" zuordnen und diese Zuordnung speichern.

Wird z. B. aufgrund von Meßungenauigkeiten oder aufgrund der Rotation des Rades 30a für verschiedene Phasenwinkel φ, die um 270° schwanken, in der Zentraleinheit 26 der gleiche maximale Empfangspegel gemessen, so wird aus diesen verschiedenen Phasenwinkeln φ ein Mittelwert gebildet, der dann bei ca. 270° liegt. Es wird dann der Mittelwert in der Zentraleinheit für die Zuordnung der Reifendruckkontrollvorrichtung 32a zu der Radposition „vorne rechts" zugrundegelegt.

Eine entsprechende Mittelwertbildung wird auch bei den anderen Reifendruckkontrollvorrichtungen 32b bis 32d durchgeführt.

Im Folgenden wird anhand der Figur 2b erläutert, wie mit Hilfe des Antennensystems 2 die Reifendruckkontrollvorrichtung 32b ihrer Radposition zugeordnet wird. Die Reifendruckkontrollvorrichtung 32b sendet zu einem beliebigen Zeitpunkt ein Hochfrequenzsignal mit ihrer individuellen Kennung aus. Dies wird abhängig von dem Phasenwinkel φ des Phasenschiebers 8 mehr oder minder stark von dem Antennensystem 2 empfangen und an die Zentraleinheit 26 weitergeleitet. Die Zentraleinheit 26 steuert den Phasenwinkel φ des Phasenschiebers 8 nach dem Empfang des Hochfrequenzsignales so, daß das Hochfrequenzsignal der Reifendruckkontrollvorrichtung 32b mit maximalem Empfangspegel empfangen wird. Da der Weg $s_1$ des Hochfrequenzsignals zu dem Fußpunkt 12 der Antenne 4 um λ/4 länger ist als der Weg $s_2$ des Hochfrequenzsignals zu dem Fußpunkt 14 der Antenne 6, ist das Hochfrequenzsignal, das an dem Fußpunkt 14 vorliegt, gegenüber dem Hochfrequenzsignal, das an dem Fußpunkt 12 vorliegt, um λ/4 „nach hinten" phasenverschoben. Aus diesem Grunde ergibt sich in dem Addierer 10 des Antennensystems 2 ein maximaler Empfangspegel, wenn die Zentraleinheit 26 den Phasenwinkel φ im Phasenschieber 8 auf 90° einstellt. In der Zentraleinheit 26 ist die Information gespeichert, daß bei einem Phasenwinkel φ von 90° des Phasenschiebers 8 das Empfangsmaximum des Antennensystems 2 auf die Radposition „hinten rechts" des Kraftfahrzeuges gerichtet ist. Die Zentraleinheit 26 kann daher die in dem Hochfrequenzsignal enthaltene individuelle Kennung der Reifendruckkontrollvorrichtung 32b der Radposition „hinten rechts" zuordnen und die Zuordnung speichern.

Im Zusammenhang mit der Figur 2c wird im Folgenden erläutert, wie die Reifendruckkontrollvorrichtungen 32c und 32d den Radpositionen zugeordnet werden. Die Reifendruckkontrollvorrichtung 32d sendet zu einem beliebigen Zeitpunkt ein Hochfrequenzsignal mit einer individuellen Kennung aus, das von dem Antennensystem 2 empfangen und an die Zentraleinheit 26 weitergeleitet wird. Es wird beispielhaft davon ausgegangen, daß der Wegunterschied $ds = s_2$ minus $s_1$ $\lambda/3$ beträgt. Der Phasenwinkel des Phasenschiebers 8 muß von der Zentraleinheit 26 dann auf 240° gestellt werden, damit die Zentraleinheit 26 im Addierer 10 des Antennensystems 2 einen maximalen Empfangspegel des von der Reifendruckkontrollvorrichtung 32d übertragenen Hochfrequenzsignals feststellt. In der Zentraleinheit 26 ist die Information gespeichert, daß bei einem Phasenwinkel $\varphi$ von 240° das Empfangsmaximum des Antennensystems 2 auf die Radposition „vorne links" gerichtet ist. Dementsprechend wird in der Zentraleinheit 26 die von der Reifendruckkontrollvorrichtung 32d übermittelte individuelle Kennung der Radposition „vorne links" zugeordnet und gespeichert.

Zu einem beliebigen Zeitpunkt sendet die Reifendruckkontrollvorrichtung 32c ein Hochfrequenzsignal mit einer individuellen Kennung aus, das von dem Antennensystem 2 bei jedem Phasenwinkel $\varphi$ des Phasenschiebers 8 empfangen und an die Zentraleinheit 26 weitergeleitet wird. Es wird davon beispielhaft ausgegangen, daß der Weg $s_1'$ des Hochfrequenzsignals zu dem Fußpunkt 12 der Antenne 4 um $\lambda/3$ länger ist, als der Weg $s_2'$ des Hochfrequenzsignals zu dem Fußpunkt 14 der Antenne 6. Das Hochfrequenzsignal, das in dem Fußpunkt 14 der Antenne 6 vorliegt, ist dann gegenüber dem Hochfrequenzsignal, das an dem Fußpunkt 12 der Antenne 4 vorliegt, um $\lambda/3$ „nach hinten" verschoben. Die Zentraleinheit 26 muß an dem Phasenschieber 8 dann einen Phasenwinkel $\varphi$ von 120° einstellen, damit am Addierer 10 des Antennensystems von der Zentraleinheit 26 der maximale Empfangspegel des Hochfrequenzsignals empfangen wird. In der Zentraleinheit 26 ist die Information gespeichert, daß bei einem Phasenwinkel $\varphi$ von 120° das Empfangsmaximum des Antennensystems 2 auf die Radposition „hinten links" gerichtet ist. Die Zentraleinheit ordnet somit die von der Reifendruckkontrollvorrichtung 32c übermittelte individuelle Kennung der Radposition „hinten links" zu und speichert diese Zuordnung. Danach sind alle Reifendruckkontrollvorrichtungen 32a bis 32d des Kraftfahrzeuges den Radpositionen zugeordnet und das Zuordnungsverfahren ist abgeschlossen.

Bei dem in Figur 2 gezeigten Ausführungsbeispiel der Erfindung wurde das Antennensystems 2 des Reifendruckkontrollsystems innerhalb des Kraftfahrzeuges derart positioniert, daß, wenn bei einem bestimmten Phasenwinkel $\varphi$ des Phasenschiebers 8 auf eine der Reifendruckkontrollvorrichtungen 32a bis 32d ein Empfangsmaximum des Antennensystems ausgerichtet ist, bei diesem Phasenwinkel $\varphi$ auf eine der anderen Reifendruckkontrollvorrichtungen 32a bis 32d kein Empfangsmaximum ausgerichtet ist. ( Dies ist immer dann der Fall, wenn $ds = s_2 - s_1$ ($s_2$ = Weglänge zum Fußpunkt 14 und $s_1$ = Weglänge zum Fußpunkt 12) für jede Reifendruckkontrollvorrichtung einen anderen Wert annimmt, da der Phasenwinkel $\varphi$, bei dem sich ein Empfangsmaximum einstellt, in eindeutiger Beziehung zu $ds$ steht). Dies führt dazu, daß den Phasenwinkeln 90°, 120°, 240° und 270° eindeutig eine Radposition des Kraftfahrzeuges und somit eine Reifendruckkontrollvorrichtung zugeordnet werden kann.

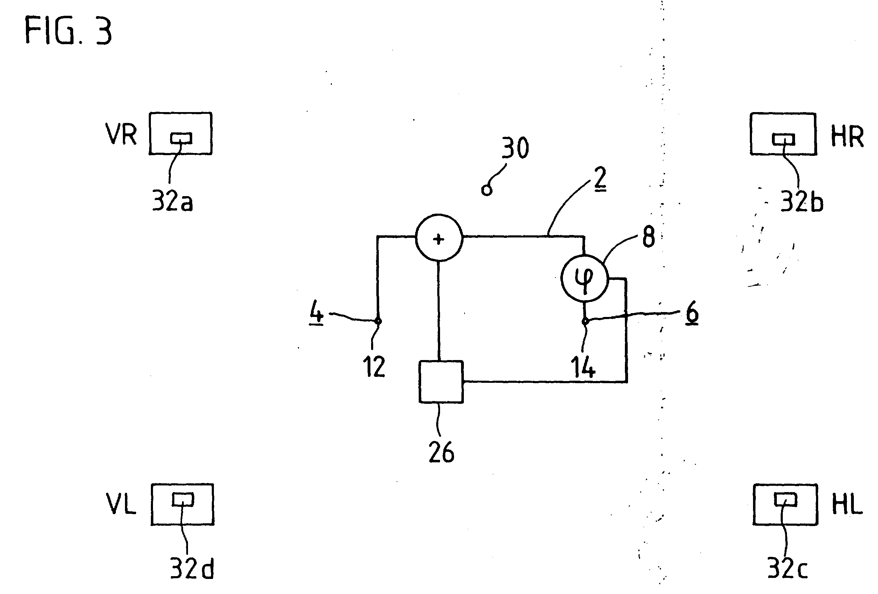

In Figur 3 ist ebenfalls in stark schematisierter Darstellung ein Kraftfahrzeug mit einem Reifendruckkontrollsystem in Draufsicht gezeigt, wobei in der Figur nur die für die nachfolgenden Erläuterungen notwendigen Bestandteile gezeigt sind. Das Antennensystem 2 des Reifendruckkontrollsystems ist in dem Kraftfahrzeug im Gegensatz zu dem in der Figur 2 gezeigten Antennensystem 2 derart positioniert, daß die Hochfrequenzsignale von den Reifendruckkontrollvorrichtungen 32a und 32d bzw. 32b und 32c zu den Fußpunkten 12 und 14 der Antennen 4 und 6 die gleiche Weglänge haben und somit $ds = s_2 - s_1$ für die genannten Reifendruckkontrollvorrichtungen übereinstimmt. Somit würde ein von der Reifendruckkontrollvorrichtung 32a ausgesendetes Hochfrequenzsignal bei dem gleichen Phasenwinkel $\varphi$ des Phasenschiebers 8 mit maximalem Empfangspegel empfangen werden, wie ein von der Reifendruckkontrollvorrichtung 32d ausgesendetes Hochfrequenzsignal. Entsprechendes gilt für die Reifendruckkontrollvorrichtungen 32b und 32c. Eine eindeutige Zuordnung der Reifendruckkontrollvorrichtungen zu den Radpositionen wäre dann nicht mehr möglich. Aus diesem Grunde enthält das Antennensystem 2 eine weitere Antenne 30, (die genau wie die Antennen 4 und 6 senkrecht aus dem Fahrzeugboden, d. h. der Papierebene, herausragt und in einem in der Papierebene liegenden Fußpunkt endet), die die Richtcharakteristik des Antennensystems 2 derart beeinflußt, daß das Antennensystem genau ein ausgeprägtes Empfangsmaximum hat, das je nach Phasenwinkel des Phasenschiebers in eine andere Richtung weist. Dies wird beispielsweise durch eine Anordnung der Antenne 30 an einem Ort erreicht, der nicht auf der Verbindungslinie zwischen den Fußpunkten 12 und 14 liegt, so wie es auch in Figur 3 gezeigt ist. Dieses genau eine ausgeprägte Empfangsmaximum läßt sich durch die Zentraleinheit 26 durch entsprechende Einstellung des Phasenwinkels $\varphi$ im Phasenschieber 8 auf die Reifendruckkontrollvorrichtungen 32a bis 32d ausrichten, so daß eine Zuordnung der Reifendruckkontrollvorrichtungen zu den Radpositionen genauso möglich ist, wie es im Zusammenhang mit der Figur 2 erläutert worden ist.

**Bezugszeichenliste**

| | |
|---|---|
| 2 | Antennensystem |
| 4, 6 | Antenne |
| 8 | Phasenschieber |
| 10 | Addierer |
| 12, 14 | Fußpunkt |
| 16, 18, 20, 22, 24 | Hochfrequenzsender |
| 26 | Zentraleinheit |
| 28 | Hochfrequenzsender |
| 30 | Antenne |

**Patentansprüche**

1. Verfahren zur Durchführung der Zuordnung von Reifendruckkontrollvorrichtungen eines Reifendruckkontrollsystems, das u. a. über folgende Bestandteile verfügt:

   - eine Zentraleinheit (26)
   - ein Antennensystem (2), das mit der Zentraleinheit (26) verbunden ist
   - eine Anzahl von Reifendruckkontrollvorrichtungen, wobei jedem Rad eines Kraftfahrzeuges eine Reifendruckkontrollvorrichtung zugeordnet ist,
   zu den Radpositionen des Kraftfahrzeuges unter Anwendung folgender Verfahrensschritte:
   - jede Reifendruckkontrollvorrichtung sendet in zeitlichen Abständen eine Datensendung mit einer individuelle Kennung an die Zentraleinheit (26) aus
   - die Zentraleinheit (26) ermittelt, von welcher Radposition die Datensendung übermittelt wurde und speichert eine Zuordnung (Kennung einer Reifendruckkontrollvorrichtung/Radposition) für jedes Rad des Kraftfahrzeuges **dadurch gekennzeichnet**, daß
   - das Antennensystem (2) derart ausgebildet ist, daß die Richtung eines Empfangsmaximums des Antennensystems mittels einer veränderlichen Steuergröße ausrichtbar ist und daß
   - die Steuergröße durch die Zentraleinheit (26) steuerbar ist, wobei der Zusammenhang zwischen dem Wert der Steuergröße und der Richtung, in die das Empfangsmaximum bei einer bestimmten Steuergröße weist, der Zentraleinheit (26) bekannt ist, und daß
   die Zuordnung einer Reifendruckkontrollvorrichtung zu einer Radposition in folgenden Verfahrensschritten durchgeführt wird:
   - die Reifendruckkontrollvorrichtung sendet eine Datensendung an die Zentraleinheit (26)
   - die Datensendung wird von der Zentraleinheit (26) über das Antennensystem (2) empfangen

   - die Zentraleinheit (26) steuert die Steuergröße derart, daß sie die Datensendung mit maximalem Empfangspegel empfängt
   - die Zentraleinheit (26) folgert, daß bei Empfang des maximalen Empfangspegels ein Empfangsmaximum in Richtung der Reifendruckkontrollvorrichtung ausgerichtet ist und stellt anhand der Steuergröße diese Richtung fest
   - die Zentraleinheit (26) ordnet die in der Datensendung enthaltene individuelle Kennung derjenigen Radposition zu, die in der zuvor festgestellten Richtung liegt.

2. Verfahren nach Anspruch 1, dadurch gekennzeichnet, daß

   — das Antennensystem (2) aus zwei Antennen (4, 6) besteht, die über einen Phasenschieber (8) miteinander gekoppelt sind, wobei je nach Phasenwinkel des Phasenschiebers (8) ein Empfangsmaximum des Antennensystems in eine andere Richtung weist, und daß
   — der Phasenwinkel des Phasenschiebers (8) durch die Zentraleinheit (26) steuerbar ist, wobei der Zusammenhang zwischen dem Phasenwinkel und der Richtung, in die das Empfangsmaximum weist, der Zentraleinheit (26) bekannt ist.

3. Verfahren nach einem der Ansprüche 1 oder 2, dadurch gekennzeichnet, daß die Zentraleinheit (26) aus mehreren Steuerparametern bzw. Phasenwinkeln, bei denen sie die individuelle Kennung mit in etwa gleich hohem Empfangspegel empfängt, einen Mittelwert bildet und anhand dieses Mittelwertes die Richtung feststellt, in der die Reifendruckkontrollvorrichtung liegt.

4. Reifendruckkontrollsystem für ein Kraftfahrzeug, das u.a. über folgende Bestandteile verfügt:

   — eine Zentraleinheit (26)
   — ein Antennensystem (2), das mit der Zentraleinheit (26) verbunden ist
   — eine Anzahl von Reifendruckkontrollvorrichtungen, wobei jedem Rad eines Kraftfahrzeuges eine Reifendruckkontrollvorrichtung zugeordnet ist, dadurch gekennzeichnet, daß
   — das Antennensystem (2) derart ausgebildet ist, daß die Richtung eines Empfangsmaximums des Antennensystems mittels eines Steuerparameters ausrichtbar ist und daß
   — der Steuerparameter durch, die Zentraleinheit (26) steuerbar ist, wobei der Zusammenhang zwischen der Größe des Steuerparameters und der Richtung, in die das Empfangsmaximum bei einem bestimmten Steuerparameter weist, der Zentraleinheit (26) bekannt ist.

**5.** Reifendruckkontrollsystem nach Anspruch 4, dadurch gekennzeichnet, daß

— das Antennensystem (2) aus zwei Antennen besteht, die über einen Phasenschieber (8) miteinander gekoppelt sind, wobei je nach Phasenwinkel des Phasenschiebers (8) ein Empfangsmaximum des Antennensystems (2) in eine andere Richtung weist und daß

— der Phasenwinkel des Phasenschiebers (8) durch die Zentraleinheit steuerbar ist, wobei der Zusammenhang zwischen dem Phasenwinkel und der Richtung, in die das Empfangsmaximum bei diesem Phasenwinkel weist, der Zentraleinheit (26) bekannt ist.

**6.** Reifendruckkontrollsystem nach einem der Ansprüche 4 bis 5, dadurch gekennzeichnet, daß das Antennensystem (2) derartig im Kraftfahrzeug angeordnet wird, daß, wenn auf eine Reifendruckkontrollvorrichtung ein Empfangsmaximum des Antennensystems (2) ausgerichtet ist, auf eine andere Reifendruckkontrollvorichtung kein Empfangsmaximum ausgerichtet ist.

**7.** Reifendruckkontrollsystem nach einem der Ansprüche 5 bis 6, dadurch gekennzeichnet, daß das Antennensystem (2) neben den beiden Antennen (4, 6), die über den Phasenschieber (8) miteinander gekoppelt sind, mindestens eine weitere Antenne enthält, die die Richtcharakteristik des Antennensystems (2) derartig beeinflußt, daß das Antennensystem (2) genau ein ausgeprägtes Empfangsmaximum hat, das je nach Phasenwinkel des Phasenschiebers (8) in eine andere Richtung weist.

**8.** Reifendruckkontrollsystem nach einem der Ansprüche 5 bis 7, dadurch gekennzeichnet, daß jede der zwei Antennen (4, 6) des Antennensystems einen Fußpunkt (12, 14) aufweist, und daß beide Fußpunkte (12, 14) auf einer Verbindungslinie liegen, die zwei gegenüberliegende Räder des Kraftfahrzeuges miteinander verbindet.

**9.** Reifendruckkontrollsystem nach Anspruch 8, dadurch gekennzeichnet, daß die beiden Fußpunkte (12, 14) der zwei Antennen (4, 6) des Antennensystems (2) einen Abstand zueinander haben, der einem Viertel des ungeradzahligen Vielfachen der Wellenlänge entspricht, mit der die Reifendruckkontrollvorrichtungen ihre individuellen Kennungen an die Zentaleinheit (26) übermitteln.

**10.** Reifendruckkontrollsystem nach einem der Ansprüche 5 bis 9, dadurch gekennzeichnet, daß die Zentraleinheit eine Leiterplatte enthält, auf der die zwei Antennen (4,6 ) und der Phasenschieber (8) des Antennensystems (2) integriert sind.

FIG. 1

# FIG. 2a

FIG. 2b

FIG. 2c

FIG. 3

VR ▭ □
└ 32a

HR ▭ □
└ 32b

30
○

2

8

4 ─○ 12

(+)

(φ)

6

14

26

VL ▭ □
└ 32d

HL ▭ □
└ 32c

EP 1 059 177 A1

**Europäisches Patentamt**

# EUROPÄISCHER RECHERCHENBERICHT

Nummer der Anmeldung

EP 00 11 1634

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 98 05518 A (SCHULZE GUNTER LOTHAR ;DODUCO GMBH (DE); KESSLER RALF (DE); KUEHNL) 12. Februar 1998 (1998-02-12) * Zusammenfassung; Abbildung 1 * | 1,4 | B60C23/04 |
| D,A | DE 196 18 658 A (CONTINENTAL AG) 13. November 1997 (1997-11-13) * Zusammenfassung; Abbildung 1 * | 1,4 | |

RECHERCHIERTE SACHGEBIETE (Int.Cl.7)

B60C

Der vorliegende Recherchenbericht wurde für alle Patentansprüche erstellt

| Recherchenort | Abschlußdatum der Recherche | Prüfer |
|---|---|---|
| DEN HAAG | 12. September 2000 | Smeyers, H |

## ANHANG ZUM EUROPÄISCHEN RECHERCHENBERICHT
## ÜBER DIE EUROPÄISCHE PATENTANMELDUNG NR.

EP 00 11 1634

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-09-2000

| Im Recherchenbericht angeführtes Patentdokument | Datum der Veröffentlichung | Mitglied(er) der Patentfamilie | | Datum der Veröffentlichung |
|---|---|---|---|---|
| WO 9805518 A | 12-02-1998 | DE | 19631783 A | 12-03-1998 |
| | | EP | 0915764 A | 19-05-1999 |
| | | US | 6034597 A | 07-03-2000 |
| DE 19618658 A | 13-11-1997 | CA | 2204817 A | 09-11-1997 |
| | | EP | 0806306 A | 12-11-1997 |
| | | US | 5808190 A | 15-09-1998 |

EPO FORM P0461

Für nähere Einzelheiten zu diesem Anhang : siehe Amtsblatt des Europäischen Patentamts, Nr.12/82